# EUROPÄISCHE PATENTANMELDUNG

(11) **EP 1 247 826 A1**
(43) Veröffentlichungstag der Anmeldung: **09.10.2002**
(21) Anmeldenummer: 02007472.0
(22) Anmeldetag: 28.03.2002
(51) Int. Cl.: C08G 18/10, C08G 18/32

(54) **Polyurethanelastomer und sein Herstellungsverfahren**

(30) Priorität: 03.04.2001 DE 10116592
(71) Anmelder: Getzner Werkstoffe GmbH, 6706 Bürs/Bludenz (AT)
(72) Erfinder: Stolz, Andreas, Dr., 6710 Nenzing (AT); Dietrich, Martin, Dipl.Ing. (FH), 6830 Rankweil (AT); Muther, Martina, Ing., 6700 Bludenzr (AT); Burtscher, Bianca, 6714 Nüziders (AT); Burtscher, Gerold, 6721 Thüringerberg (AT)
(74) Vertreter: Gössmann, Christoph

(57) **Zusammenfassung**

Polyurethanelastomer herstellbar auf der Basis von zumindest einer Isocyanatkomponente, zumindest einer Polyolkomponente, zumindest einem Katalysator und zumindest einem sterisch gehinderten Diol.

## Beschreibung

Die Erfindung betrifft Polyurethanelastomere, ein Verfahren zur Herstellung von Polyurethanelastomeren und Formkörpern.

Bekannt ist, dass hochdämpfende Werkstoffe meistens aus Polyvinylchlorid oder aus Polyethylen gefertigt werden, wobei vor allem Polyvinylchlorid folgende Nachteile aufweist: Entstehung von Salzsäuredämpfen bei thermischer Zersetzung von Polyvinylchlorid; Verflüchtigung des Weichmachers bei Polyvinylchlorid;
Die wenigen hochdämpfenden Polyurethanelastomere, die sich auf dem Markt befinden, weisen einen Dichtebereich auf, der bei 30 - 100 kg/m³ liegt, was ein Fehlen von Dämpfungsunterlagen für schwere Maschinen, Geräte, etc. zur Folge hat.

Es ist Aufgabe der Erfindung die Nachteile des Standes der Technik zu überwinden und die Eigenschaften von Polyurethanelastomeren zu verbessern.

Diese Aufgabe wird durch die Erfindung gelöst.

Ein Gegenstand der Erfindung ist ein Polyurethanelastomer, das auf der Basis von zumindest einer Isocyanatkomponente, zumindest einer Polyolkomponente, zumindest einem Katalysator und zumindest einem sterisch gehinderten Diol herstellbar ist.

Alle im folgenden genannten Kombinationen von Verbindungen oder Komponenten können in beliebigen Verhältnissen verwendet werden.

Als sogenannte Isocyanatkomponenten können vorzugsweise alle bifunktionellen aromatischen und/oder aliphatischen Isocyanate folgender allgemeiner Strukturformel verwendet werden. Und zwar vorzugsweise als Monomer einzeln oder in Kombination mit anderen Monomeren, als präpolymeres Isocyanat einzeln oder in Kombination mit anderen Präpolymeren oder Monomeren.

Als Monomere werden vorzugsweise OCN - R - NCO verwendet und als Präpolymere werden vorzugsweise OCN - R¹- NCO verwendet.
wobei R vorzugsweise (CH₂)ₙ₁, 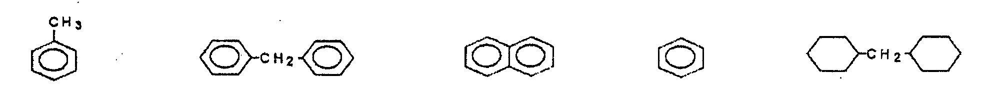 und
R¹ vorzugsweise
R-(NH)-(C=O)-0-[(CH-R²)-CH₂-O-]-(C=O)-(NH)-R oder R-NH-(C=O)-O-[(C=O)-R³-(C=O)-O-R⁴-O-]-(C=O)-NH-R bedeutet,
wobei R vorzugsweise (CH₂)ₙ₁, 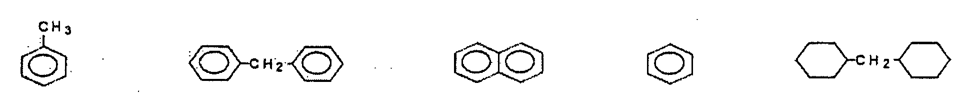 R² vorzugsweise H, CH₃ oder aliphatischer Kohlenwasserstoffrest mit 2 bis 4 Kohlenstoffatomen, wie vorzugsweise Ethyl-, n-Propyl-, iso-Propyl-, 1-n-Butyl-, 2-n-Butyl-, iso-Butyl-, tert.-Butyl- bedeutet.
R³ vorzugsweise (CH₂)ₙ₁, Phenyl,
und R⁴ vorzugsweise (CH₂)ₙ₂ bedeutet und
n1 eine ganze Zahl von 1 bis 10, bevorzugt von 2 bis 8, besonders bevorzugt von 2 bis 6 ist.
n2 eine ganze Zahl von 1 bis 10, bevorzugt von 1 bis 6, besonders bevorzugt von 2 bis 5 ist.

Bevorzugt werden alle Diisocyanatdiphenylmethan (MDI)-Varianten der allgemeinen Strukturformel wie folgt verwendet.
MDI - Varianten sind: OCN -R⁵- NCO
wobei R⁵ vorzugsweise: 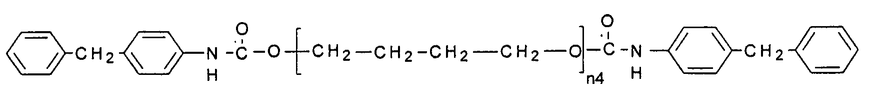 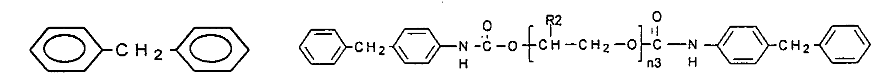 R² vorzugsweise H, CH₃ oder aliphatischer Kohlenwasserstoffrest mit 2 bis 4 Kohlenstoffatomen, wie vorzugsweise Ethyl-, n-Propyl-, iso-Propyl-, 1-n-Butyl-, 2-n-Butyl-, iso-Butyl-, tert.-Butyl- bedeutet und
n3 eine ganze Zahl von 1 bis 500, bevorzugt von 10 bis 300, besonders bevorzugt von 10 bis 200 ist.
n4 eine ganze Zahl von 1 bis 10, bevorzugt von 1 bis 5, besonders bevorzugt von 1 bis 3 ist.

Besonders bevorzugt werden Quasipräpolymere MDI-Variationen für die Herstellung der hochdämpfenden Polyurethanelastomere nach den allgemeinen Strukturformeln in beliebigen Kombinationen verwendet:
Quasipräpolymere wie vorzugsweise MDI:
   OCN - R⁶ -NCO und 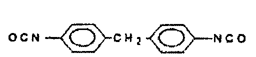
wobei R⁶ 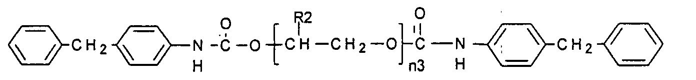 bedeutet,
wobei R² vorzugsweise H, CH₃ oder aliphatischer Kohlenwasserstoffrest mit 2 bis 4 Kohlenstoffatomen, wie vorzugsweise Ethyl-, n-Propyl-, iso-Propyl-, 1-n-Butyl-, 2-n-Butyl-, iso-Butyl-, tert.-Butyl- bedeutet, und
n3 eine ganze Zahl von 1 bis 500, bevorzugt von 10 bis 300, besonders bevorzugt von 100 bis 200 ist.

Die Isocaynatkomponente wird vorzugsweise in einer Menge von 5 Gew.% bis 50 Gew.%, bevorzugt von 10 Gew.% bis 40 Gew.%, besonders bevorzugt von 20 Gew.% bis 35 Gew.% bezogen auf das Gesamtgewicht der Zusammensetzung eingesetzt.

Als Polyolkomponenten kommen vorzugsweise alle bi- und trifunktionellen Polyether- und/oder Polyesterpolyole, sowie Kombinationen solcher Komponenten zur Anwendung. Diese Polyolkomponenten werden durch die nachfolgend beschriebene allgemeine Strukturformel charakterisiert.

Vorzugsweise handelt es sich bei den Polyetherpolyolen um: HO-R⁷-H
wobei R⁷ vorzugsweise (CH₂CHR²O)ₙ₅ und
R² vorzugsweise H, CH₃ oder aliphatischer Kohlenwasserstoffrest mit 2 bis 4 Kohlenstoffatomen, wie vorzugsweise Ethyl-, n-Propyl-, iso-Propyl-, 1-n-Butyl-, 2-n-Butyl-, iso-Butyl-, tert.-Butyl- bedeutet.
n5 eine ganze Zahl von 1 bis 5000, bevorzugt von 1 bis 500, besonders bevorzugt von 50 bis 200 ist.

Vorzugsweise handelt es sich bei den Polyesterpolyolen um: 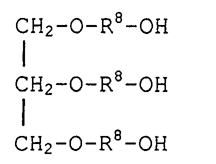 wobei R⁸ vorzugsweise [(C=O)-R³-(C=O)-O-R⁴-O]ₙ₆
und R³ vorzugsweise (CH₂)ₙ₇, Phenyl und
R⁴ vorzugsweise (CH₂)ₙ₂ bedeutet.
n6 eine ganze Zahl von 1 bis 200, bevorzugt von 1 bis 100, besonders bevorzugt von 20 bis 60 ist.
n7 eine ganze Zahl von 1 bis 15, bevorzugt von 1 bis 10, besonders bevorzugt von 2 bis 6 ist.
n2 eine ganze Zahl von 1 bis 10, bevorzugt von 1 bis 6, besonders bevorzugt von 2 bis 5 ist.

Bevorzugt sind die bifunktonellen Polyetherpolyole oder die bifunktionellen Polyesterpolyole der allgemeinen Strukturformel:
Bifunktionelle Polyole
   HO-R⁹-H
wobei R⁹ vorzugsweise (CH₂CHR²0)ₙ₅ und
[(C=O)-R³-(C=O)-O-R⁴-O]ₙ₆,
wobei R² vorzugsweise H, CH₃, aliphatischer Kohlenwasserstoffrest mit 2 bis 4 Kohlenstoffatomen, wie vorzugsweise Ethyl-, n-Propyl-, iso-Propyl-, 1-n-Butyl-, 2-n-Butyl-, iso-Butyl-, tert.-Butyl-,
R³ vorzugsweise (CH₂)ₙ₇, Phenyl und
R⁴ vorzugsweise (CH₂) ₙ₂ bedeutet.
n5 eine ganze Zahl von 1 bis 5000, bevorzugt von 1 bis 500, besonders bevorzugt von 50 bis 200 ist.
n6 eine ganze Zahl von 1 bis 200, bevorzugt von 1 bis 100, besonders bevorzugt von 20 bis 60 ist.
n7 eine ganze Zahl von 1 bis 15, bevorzugt von 1 bis 10, besonders bevorzugt von 2 bis 6 ist.
n2 eine ganze Zahl von 1 bis 10, bevorzugt von 1 bis 6, besonders bevorzugt von 2 bis 5 ist.

Besonders bevorzugt kommen die bifunktionellen Polyetherpolyole zum Einsatz mit der allgemeinen Formel:
Bifunktionelle Polyetherpolyole: HO-R⁷-H
wobei
R⁷ vorzugsweise (CH₂CHR²O)ₙ₅
R² vorzugsweise H, CH₃, aliphatischer Kohlenwasserstoffrest mit 2 bis 4 Kohlenstoffatomen, wie vorzugsweise Ethyl-, n-Propyl-, iso-Propyl-, 1-n-Butyl-, 2-n-Butyl-, iso-Butyl-, tert.-Butylbedeutet.
n5 eine ganze Zahl von 1 bis 5000, bevorzugt von 1 bis 500, besonders bevorzugt von 50 bis 200 ist.

Die Polyolkomponente wird vorzugsweise in einer Menge von 10 Gew.% bis 80 Gew.%, bevorzugt von 30 Gew.% bis 80 Gew.%, besonders bevorzugt von 40 Gew.% bis 70 Gew.% bezogen auf das Gesamtgewicht der Zusammensetzung eingesetzt.

Weiter werden sogenannte Kettenverlängerer für die Herstellung eines hochdämpfenden Polyurethanelastomers eingesetzt. Es handelt sich bei diesen Kettenverlängerern um spezielle sterisch gehinderte, unsymmetrische Diole. Diese sterisch gehinderten unsymmetrischen Diole können auch mit anderen sterisch gehinderten bzw. unsymmetrischen Diolen, mit sterisch nicht gehinderten Diolen, mit sich selbst oder mit Triolen kombiniert werden, die in nachfolgenden allgemeinen Strukturformeln dargestellt werden.

Als Kettenverlängerer wird vorzugsweise:
HO-R¹⁰-OH, HO-R¹¹-OH verwendet, wobei R¹⁰ vorzugsweise (CH₂)ₙ₈, -(CH₂-CH₃)-(CH₂)ₙ₈-, -CH₂-(CH-CH₃)ₙ₈-,
R¹¹ vorzugsweise -CH₂-(HC-OH)-CH₂-, -CH₂-(HC-OH)-(CH₂)ₙ₈bedeutet.
n8 eine ganze Zahl von 1 bis 10 , bevorzugt von 1 bis 7, besonders bevorzugt von 2 bis 6 ist.

Es sind auch Kombinationen dieser sterisch gehinderten unsymmetrischen Diole mit Diolen und/oder Triolen mit Heteroatomen im Gerüst möglich (siehe nachfolgende Strukturformeln).

Als Kettenverlängerer mit Heteroatomen wird vorzugsweise:
HO-R¹²-OH, HO-R¹³-OH verwendet,
wobei R¹² vorzugsweise (CH₂)ₙ₉-O-(CH₂)ₙ₉, -(CH₂)ₙ₉-NH-(CH₂)ₙ₉, (CH₂)ₙ₉-O-(CH₂)ₙ₉-O-(CH₂)ₙ₉, -(CH₂)ₙ₉ -NH- (CH₂)ₙ₉-NH- (CH₂)ₙ₉ und R¹³ vorzugsweise [CH₂-(HC-OH)-O-(CH₂)ₙ₉], [CH₂-(HC-OH)-NH-(CH₂)ₙ₉] bedeutet.
n9 eine ganze Zahl von 1 bis 10, bevorzugt von 1 bis 7, besonders bevorzugt von 2 bis 4 ist.

Kombinationen von sterisch gehinderten unsymmetrischen Diolen mit Di- und/oder Triaminen nach folgenden Strukturformeln sind ebenfalls möglich.

Bei den Di-/Triaminen handelt es sich vorzugsweise um:

H₂N-R¹⁴-NH₂, H₂N-R¹⁵-NH₂,

wobei R¹⁴ vorzugsweise -(CH₂)ₙ₁₀-CH₂-
R¹⁵ vorzugsweise -(CH₂)-(HC-NH₂)-CH₂- bedeutet
n10 eine ganze Zahl von 1 bis 10, bevorzugt von 1 bis 7, besonders bevorzugt von 2 bis 5 ist.

Bevorzugt kommen Stereoisomere von Propandiol, Butandiol, Pentandiol, Hexandiol oder Glykol zum Einsatz, die durch folgende Strukturformeln dargestellt werden können.

Diole: HO-R¹⁶-OH,
wobei R¹⁶ vorzugsweise (CH₂)₂, (CH₂)₄, -CH₂-CH₂-CH-CH₃, CH₃-CH-CH-CH₃ -CH₂- (CH-CH₃)-CH₂-CH₂-, CH₃-(C-CH₃)-CH₂-CH-CH₃, -CH₂-CH₂-CH₂-, -CH₂-CH-CH₃ bedeutet.

Besonders bevorzugt kommen 1,3-Butandiol, 2,3-Butandiol, 1,2-Propandiol und 2-Methyl-2,4-pentandiol zur Verwendung.

Die Diolkomponente wird vorzugsweise in einer Menge von 1 Gew.% bis 20 Gew.%, bevorzugt von 1 Gew.% bis 10 Gew.%, besonders bevorzugt von 1 Gew.% bis 7 Gew.% bezogen auf das Gesamtgewicht der Zusammensetzung eingesetzt.

Als Katalysatoren kommen vorzugsweise sämtliche Sn, Zn und oder Aminkatalysatoren laut nachstehender allgemeiner Strukturformel in Frage.

Als Katalysatoren sind bevorzugt: 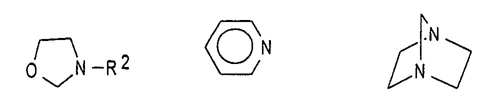 R¹⁷-(N-R¹⁷) -R¹⁷_{,} Metallamine
(R¹⁷)₂-N-CH₂-CH₂-N-(R¹⁷)₂,
wobei R¹⁷ vorzugsweise H, CH₃, -(CH₂)ₙ-CH₃, Cyclohexan und R² vorzugsweise H, CH₃, aliphatischer Kohlenwasserstoffrest mit 2 bis 4 Kohlenstoffatomen, wie vorzugsweise Ethyl-, n-Propyl-, iso-Propyl-, 1-n-Butyl-, 2-n-Butyl-, iso-Butyl-, tert.-Butylbedeutet.
Besonders bevorzugt sind die Katalysatoren Triethylamin, Zinnamin und/oder Diazobicyclooctan.

Der Katalysator wird vorzugsweise in einer Menge von 0,05 Gew.% bis 7 Gew.%, bevorzugt von 0,05 Gew.% bis 4 Gew.%, besonders bevorzugt von 0,1 Gew.% bis 2 Gew.% bezogen auf das Gesamtgewicht der Zusammensetzung eingesetzt.

Weiter können vorzugsweise noch Zusatzmittel verwendet werden, um diese hochdämpfenden Polyurethanelastomere herzustellen. Unter anderem können noch vorzugsweise Farbstoffe, Zellstabilisatoren, Molekularsiebe, Treibmittel, etc. zugegeben werden. Diese werden vorzugsweise in einer Menge von 1 Gew.% bis 10 Gew.%, bevorzugt von 1 Gew.% bis 7 Gew.%, besonders bevorzugt von 2 Gew.% bis 5 Gew.% bezogen auf das Gesamtgewicht der Zusammensetzung eingesetzt.

Als Treibmittel kommt bevorzugt Wasser bzw. HFCKW zum Einsatz. Besonders bevorzugt wird Wasser bei der Herstellung der hochdämpfenden Polyurethanelastomere verwendet. Das Treibmittel wird vorzugsweise in einer Menge von 0,1 Gew.% bis 10 Gew.%, bevorzugt von 0,1 Gew.% bis 5 Gew.%, besonders bevorzugt von 0,5 Gew.% bis 3 Gew.% bezogen auf das Gesamtgewicht der Zusammensetzung eingesetzt.

Ein weiterer Gegenstand der Erfindung ist ein Verfahren zur Herstellung von Polyurethanelastomeren, dadurch gekennzeichnet, dass zumindest eine Isocyanatkomponente, zumindest eine Polyolkomponente, zumindest ein Katalysator und zumindest ein sterisch gehindertes Diol miteinander reagieren gelassen werden.

### Beschreibung des Herstellungsverfahrens:

Die erfindungsgemäßen Polyurethanelastomere werden durch ein Polyadditionsverfahren auf handelsüblichen Hochdruck- oder Niederdruckpolyurethananlagen in einem Temperaturbereich von 15°C bis 70°C, bevorzugt bei 20 bis 30 °C und einem Verarbeitungsdruck von 1 bar bis 40 bar, bevorzugt bei 1 bar bis 5 bar hergestellt.
Dabei werden vorzugsweise 10 Gew.% - 80 Gew.%, bevorzugt 30 Gew.% - 80 Gew.%, besonders bevorzugt 40 Gew.% - 70 Gew.% der oben erwähnten Polyole, bevorzugt Polyetherpolyole, vorzugsweise 1 Gew.%- 20 Gew.%, bevorzugt 1 Gew.% - 10 Gew.%, besonders bevorzugt 1 Gew.%- 7 Gew% der genannten Kettenverlängerer, vorzugsweise 2-Methyl-2,4-pentandiol, Farben in Mengen von vorzugsweise 1 Gew.% - 10 Gew.%, bevorzugt 1 Gew.% - 7 Gew.%, besonders bevorzugt von 2 Gew.% - 5 Gew.%, Treibmittel, bevorzugt Wasser, in Mengen von vorzugsweise 0,1 Gew.% bis 10 Gew.%, bevorzugt 0,1 Gew.% bis 5 Gew.%, besonders bevorzugt 0,5 Gew.% bis 3 Gew.%, Zusatzstoffe und Katalysatoren in einer Menge von 0,05 Gew% - 7 Gew.%, bevorzugt 0,05 Gew.% - 4 Gew.%, besonders bevorzugt 0,1 Gew.% - 2 Gew.% in einem Mischtank vermengt. 5 Gew.%- 50 Gew.%, bevorzugt 10 Gew.% - 40 Gew.%, besonders bevorzugt 20 Gew.% - 35 Gew.% des in einem weiteren Vorratstank aufbewahrten Isocyanates, bevorzugt Quasipräpolymere von Diisocyanatodiphenylmethan, und diese Polyolmischung werden dann über ein Pumpensystem zum Mischkopf der Polyurethananlage gepumpt, dort gemischt, bevorzugt mit einem Lamellenrührer und werden dann je nach Produkt auf ein Band gegossen oder in eine Form gefüllt. (Alle vorstehend gemachten Gewichtsangaben beziehen sich auf das Gesamtgewicht der Zusammensetzung)

Ein weiterer Gegenstand ist ein Formkörper der folgende Werkstoffeigenschaften aufweist:
Verlustfaktor: 0,3 - 1
Einsatztemperatur: -30 - +70 [°C]
Rückprallelastizität: 0 - 15 [%]
Dichte: 100- 1100 [kg/m³]
Tragfähigkeit: 0,01 - 0,5 [N/mm²].
Reissfestigkeit: 0,2 - 2 [N/mm²]
Reissdehnung: 300 - 500 [%]
Druckverformungsrest : 1- 5 [%]

Verlustfaktor nach DIN 53513
Rückprallelastizität nach DIN 53512
Reissfestigkeit nach DIN 53455-6-4
Reissdehnung nach DIN 53455-6-4
Zugversuch nach DIN 53455
Druckverformungsrest nach DIN 53572

Diese speziellen hochdämpfenden Polyurethanelastomere haben einen breiten Anwendungsbereich und kommen vor allem bei Sportartikeln, im Automobilbereich, auf dem Bau, in der Industrie, bei der Bahn und im Bekleidungssektor zum Einsatz, da in diesen Bereichen eine hohe Anforderung an dämpfende bzw. schockabsorbierende Materialien in einem breiten Temperaturbereich gestellt wird.

Die Vorteile dieser hochdämpfenden Polyurethanelastomere sind unter anderen:
Tragekomfort im Bekleidungssektor, Schutz vor Schlägen im Sportartikelbereich und Lärmdämmung im Automobil- , Bau- und Industriebereich.

### Beispiele

### Beispiel 1

100 g Polyetherdiol (MG 4800) werden mit 3 g Glycerin, 4 g 2-Methyl-2,4-pentandiol, 0,3 g Wasser und 0,2 g Katalysator (Diazabicyclooctan) 25 sec. mit einem Handrührer in einem Becher vermischt. Danach werden 47 g Diisocyanatodiphenylmethan (Quasipräpolymer) dazugemischt, das Ganze nochmals 20 sec. gerührt und danach in eine beheizte Form gegossen.
(Verlustfaktor: 0,55)

### Beispiel 2

Es wird wie in Beispiel 1 vorgegangen, mit dem Unterschied, dass kein Treibmittel verwendet wird und statt 4 g 2-Methyl-2,4-pentandiol wurden 7 g 2-Methyl-2,4-pentandiol eingesetzt und die Katalysatormenge auf 0,3 g angehoben wurde. Auch die Isocyanatmenge wurde auf 51 g angehoben. (Verlustfaktor: 0,6)

### Beispiel 3

Dieses Beispiel dient als Vergleich, bei dem keine unsymmetrischen Kettenverlängerer eingesetzt wurden. Der Verlustfaktor ist dementsprechend niedrig und das Material kann nicht als hochdämpfend bezeichnet werden.
100 g Polyetherdiol (MG 4800) werden mit 7 g 1,4- Butandiol, ohne Treibmittel und mit 0,3 g Katalysator (Diazabicyclooctan) wie in Beispiel 2 vermischt und mit 37 g Diisocyanatodiphenylmethan (Quasipräpolymer) (die Menge an Isocyanat ist abhängig von der Hydroxylmenge des 1, 4-Butadiols) wie oben umgesetzt. (Verlustfaktor: 0,12)

### Beispiel 4

Es wird wie Beispiel 1 vorgegangen, aber anstelle der dort verwendeten Kettenverlängerer wurde 5 g 1,2-Propandiol eingesetzt und mit 39 g Diisocyanatodiphenylmethan umgesetzt. (Verlustfaktor: 0,55)

## Patentansprüche

1. Polyurethanelastomer herstellbar auf der Basis von zumindest einer Isocyanatkomponente, zumindest einer Polyolkomponente, zumindest einem Katalysator und zumindest einem sterisch gehinderten Diol.

2. Polyurethanelastomer nach Anspruch 1, **dadurch gekennzeichnet, dass** es sich bei der Isoocyantkomponente um Diisocyanatdiphenylmethanverbindungen der folgenden Formel handelt: OCN -R⁵- NCO
wobei R⁵, 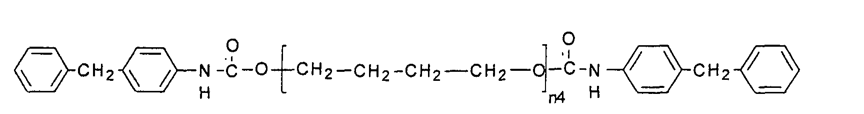 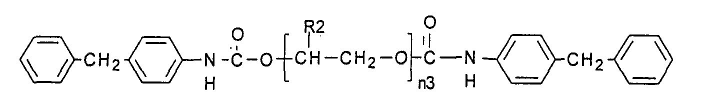 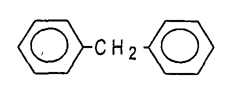 R² H, CH₃ oder aliphatischer Kohlenwasserstoffrest mit 2 bis 4 Kohlenstoffatomen bedeutet und
n3 eine ganze Zahl von 1 bis 500 ist.
n4 eine ganze Zahl von 1 bis 10

3. Polyurethanelastomer nach Anspruch 1, **dadurch gekennzeichnet, dass** es sich bei der Isoocyantkomponenete um folgende Strukturformeln handelt:
Quasipräpolymeres MDI:
OCN - R⁶ -NCO und 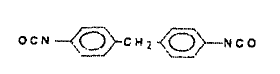
wobei R⁶ 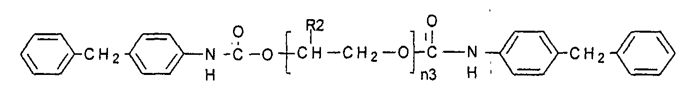 bedeutet,
wobei R² H, CH₃ oder aliphatischer Kohlenwasserstoffrest mit 2 bis 4 Kohlenstoffatomen bedeutet, und n3 eine ganze Zahl von 1 bis 500 ist.

4. Polyurethanelastomer nach Anspruch 1, **dadurch gekennzeichnet, dass** es sich bei der Polyolkomponente um Polyetherpolyole der folgenden Strukturformel handelt:
HO-R⁷-H
wobei R⁷ (CH₂CHR²0)ₙ₅ und
R² H, CH₃ oder aliphatischer Kohlenwasserstoffrest mit 2 bis 4 Kohlenstoffatomen bedeutet,
n5 eine ganze Zahl von 1 bis 5000 ist.

5. Polyurethanelastomer nach Anspruch 1, **dadurch gekennzeichnet, dass** es sich bei den sterisch gehinderten Diolen um Stereoisomere von Propandiol, Butandiol, Pentandiol, Hexandiol oder Glykol handelt.

6. Polyurethanelastomer nach Anspruch 1, **dadurch gekennzeichnet, dass** es sich bei den sterisch gehinderten Diolen um 1,3-Butandiol, 2,3-Butandiol, 1,2-Propandiol und 2-Methyl-2,4-pentandiol handelt.

7. Polyurethanelastomer nach einem der Ansprüche 1 bis 6, **dadurch gekennzeichnet, dass** es sich bei dem Katalysator, um Triethylamin, Diazobicyclooctan und/oder Zinnamin handelt.

8. Verfahren zur Herstellung von Polyurethanelastomeren, **dadurch gekennzeichnet, dass** zumindest eine Isocyanatkomponente, zumindest eine Polyolkomponente, zumindest ein Katalysator und zumindest ein sterisch gehindertes Diol mit einander reagieren gelassen werden.

9. Formkörper, **dadurch gekennzeichnet, dass** er folgende Werkstoffeigenschaften aufweist:
Verlustfaktor: 0,3 - 1
Einsatztemperatur: -30 - +70 [°C]
Rückprallelastizität: 0 - 15 [%]
Dichte: 100- 1100 [kg/m³]
Tragfähigkeit: 0,01 - 0,5 [N/mm²]
Reissfestigkeit: 0,2 - 2 [N/mm²]
Reissdehnung: 300 - 500 [%]
Druckverformungsrest: 1- 5 [%]
